# EUROPEAN PATENT APPLICATION

(11) **EP 4 668 531 A1**
(43) Date of publication of application: **24.12.2025**
(21) Application number: 23925042.6
(22) Date of filing: 01.12.2023
(51) Int. Cl.: H02J 7/00, H02M 3/158

(54) **BATTERY AND POWER CONSUMPTION SYSTEM**

(30) Priority: 01.03.2023 CN 202310242734
(71) Applicant: Huawei Digital Power Technologies Co., Ltd., Shenzhen, Guangdong 518043 (CN)
(72) Inventor: ZHU, Jianhua, Shenzhen, Guangdong 518043 (CN); JIANG, Hongxu, Shenzhen, Guangdong 518043 (CN); TUO, Hong, Shenzhen, Guangdong 518043 (CN)
(74) Representative: Gill Jennings & Every LLP
(86) International application number: PCT/CN2023/135849
(87) International publication number: WO 2024/179095

(57) **Abstract**

Embodiments of this application provide a battery and a power consumption system. After the battery is connected to a load, to make full use of an available capacity of a cell group, a processor in the battery may determine an open-circuit voltage of the cell group or a state of capacity of the cell group. A DC-DC conversion circuit supplies power to the load in a first discharge mode or a second discharge mode based on the determined open-circuit voltage of the cell group or the determined state of capacity of the cell group. The first discharge mode is supplying power to the load based on a discharge curve of the cell group, the second discharge mode is supplying power to the load based on a first specified voltage, and the first specified voltage is within a working voltage range of the load.

## Description

### CROSS-REFERENCE TO RELATED APPLICATIONS

This application claims priority to Chinese Patent Application No. 202310242734.X, filed with the China National Intellectual Property Administration on March 1, 2023 and entitled "BATTERY AND POWER CONSUMPTION SYSTEM", which is incorporated herein by reference in its entirety.

### TECHNICAL FIELD

This application relates to the field of battery technologies, and in particular, to a battery and a power consumption system.

### BACKGROUND

Compared with a conventional lead-acid battery, a lithium iron phosphate battery has obvious advantages in energy density, cycle life, charge rate, and environmental protection. In addition, the lithium iron phosphate battery is better than a ternary lithium battery in costs and security. Therefore, lithium iron phosphate batteries are widely used in the fields of new energy vehicles, energy storage systems, and backup power of ICT infrastructures. However, the lithium iron phosphate battery also has some disadvantages, for example, lithium ore, as a raw material, is extremely unevenly distributed around the world, a discharge capacity below -10°C is low, and a discharge capacity is low when a discharge rate is high.

In recent years, sodium ion batteries have emerged as a new energy storage technology. With rapid development of new energy vehicles and energy storage markets, supply of lithium resources is insufficient, and strategic significance of the sodium ion batteries is prominent. The sodium ion battery features high sodium abundance and low solvent energy, and is better than the lithium iron phosphate battery in material costs, low-temperature discharge capacity, and high-rate discharge performance. In addition, the sodium ion battery has a similar manufacturing process and procedure with a lithium ion battery, and can be an effective supplement and replacement solution for the lithium iron phosphate battery in some application scenarios.

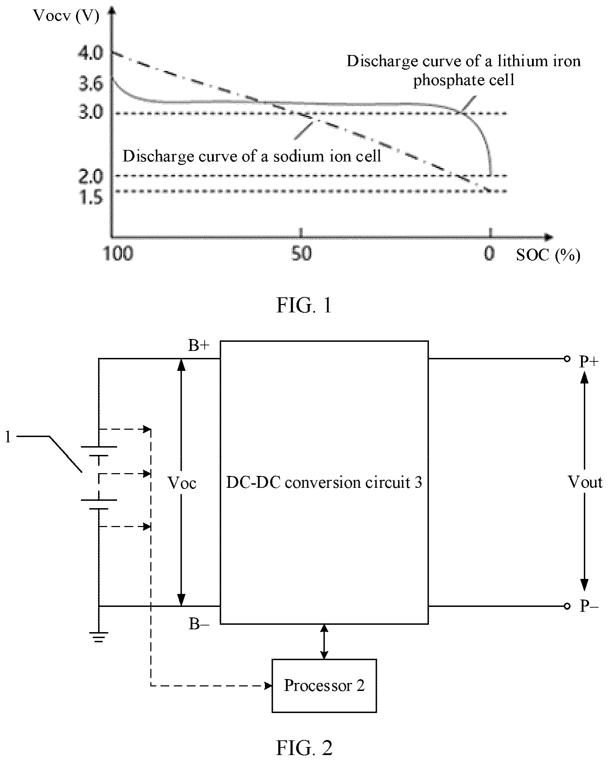

However, an electrochemical system of the sodium ion battery determines that an open-circuit voltage (Vocv) of a cell varies greatly with a state of capacity (state of capacity, SOC) during discharging. For example, refer to FIG. 1. A discharge voltage range of a lithium iron phosphate cell is usually 2.0 V to 3.6 V, and a Vocv-SOC curve is flatter. A discharge voltage range of a sodium ion cell is 1.5 V to 4.0 V, complete overdischarge of the cell is allowed (that is, Vocv=0 V), and a Vocv-SOC curve is steeper. However, a working voltage of a back-end load serving as a power supply object of a battery usually has a specific range. If a power supply voltage of the battery is lower than a lower limit of the working voltage range, input undervoltage protection of the back-end load is triggered. If the power supply voltage of the battery exceeds an upper limit of the working voltage range, input overvoltage protection of the back-end load is triggered, and even the load is damaged. Consequently, a wide discharge voltage range of the sodium ion cell and a narrow working voltage range of the load conflicts with each other, which brings a challenge to application of the sodium ion battery.

In conclusion, how to make full use of a cell capacity of a battery as much as possible, match wide discharge voltage ranges of different types of batteries with working voltage ranges of loads, simplify control as much as possible, reduce costs of a battery management circuit and a charge/discharge loss of the battery, and improve charge/discharge efficiency of the battery is an urgent problem to be resolved in this field.

### SUMMARY

This application provides a battery and a power consumption system, to make full use of an available capacity of a cell group.

According to a first aspect, a battery provided in an embodiment of this application may specifically include a cell group, a processor, and a DC-DC conversion circuit. The cell group may include n cells connected in series, and the DC-DC conversion circuit is connected to the cell group. In some embodiments of this application, the DC-DC conversion circuit may have a cell group interface configured to connect to the cell group and a battery group interface configured to connect to a load or a charging adapter. Specifically, a positive electrode of the cell group interface is connected to a positive electrode of the cell group, and a negative electrode of the cell group interface is connected to a negative electrode of the cell group. A positive electrode of the battery group interface is configured to connect to a positive electrode of the load or a positive electrode of the charging adapter, and a negative electrode of the battery group interface is configured to connect to a negative electrode of the load or a negative electrode of the charging adapter. The negative electrode of the cell group interface is connected to the negative electrode of the battery group interface. The processor may control a status of the DC-DC conversion circuit, to complete charging, discharging, and electric energy exchanging with the outside. When the battery is connected to the load, the processor may determine an open-circuit voltage of the cell group or a state of capacity of the cell group, and the DC-DC conversion circuit may supply power to the load in a first discharge mode or a second discharge mode based on the open-circuit voltage of the cell group or the state of capacity of the cell group, to make full use of an available capacity of the cell group. Specifically, the first discharge mode is supplying power to the load based on a discharge curve of the cell group, the second discharge mode is supplying power to the load based on a first specified voltage, and the first specified voltage is within a working voltage range of the load.

Specifically, when the battery is connected to the load for discharging, the processor may determine a relationship between a discharge voltage of the battery and the working voltage range of the load. When it is determined that the discharge voltage of the battery is outside the working voltage range of the load, the second discharge mode may be selected, and the DC-DC conversion circuit is controlled to perform amplitude limiting on the discharge voltage of the battery, to make the discharge voltage of the battery be within the working voltage range of the load, to make full use of the available capacity of the cell group as much as possible, so as to match a wide discharge voltage range of a sodium ion battery with the working voltage range of the load. When determining that the discharge voltage of the battery is within the working voltage range of the load, the processor may select the first discharge mode, and may keep a switch connected in series in a discharge loop in the DC-DC conversion circuit in a turned-on state (that is, the switch does not perform a switching action of turning on and turning off), so that the open-circuit voltage of the cell group is directly output, through the turned-on switch, to the battery group interface through the cell group interface, to control the DC-DC conversion circuit to supply power to the load based on a discharge curve of the cell group. A curve formed by a change of an open-circuit voltage (namely, Vocv) of a cell during discharging with the state of capacity (state of capacity, SOC) is the discharge curve of the cell group. The discharge curve of the cell varies with a material. For example, a discharge curve of a lithium iron phosphate cell is flat, and a discharge curve of a sodium ion cell is steeper. In this way, a high-frequency on-off action in the DC-DC conversion circuit can be reduced, a loss of the switch can be reduced, and discharge efficiency of the battery can be improved.

In some embodiments of this application, when the processor controls the DC-DC conversion circuit to perform amplitude limiting on the discharge voltage of the battery, the DC-DC conversion circuit specifically outputs the discharge voltage of the battery in a constant-voltage, linear, piecewise linear, or stepwise amplitude limiting manner. The constant-voltage means that an output voltage of the battery group interface of the DC-DC conversion circuit is constant. The linear means that the output voltage of the battery group interface of the DC-DC conversion circuit decreases linearly monotonically or increases linearly monotonically. The piecewise linear means that the output voltage of the battery group interface of the DC-DC conversion circuit may be formed by combining two or more broken lines, and each line is linear. The stepwise means that the output voltage of the battery group interface of the DC-DC conversion circuit includes two or more constant values. The following two embodiments are described by using an example in which the processor controls the DC-DC conversion circuit to perform constant-voltage amplitude limiting on the discharge voltage of the battery. However, the two embodiments may also be implemented in another amplitude limiting manner. This is not limited herein.

For different relationships between a quantity of cells connected in series in the cell group and the working voltage range of the load, embodiments of this application provide two embodiments.

### Embodiment 1:

Embodiment is applicable to application in which a small quantity of cells are connected in series in the cell group. For example, the working voltage range of the load is 42 V to 57.6 V, and a quantity n of cells connected in series is 14. Even if the battery is fully charged, that is, a voltage of each cell reaches 4.0 V, the open-circuit voltage of the cell group is 14*4.0 V=56 V, and is less than an upper limit value 57.6 V of the working voltage range of the back-end load. In this case, when the battery is discharged to have a voltage less than a lower limit value of the working voltage range of the load, for example, the voltage of the cell is discharged to 2.5 V, and the open-circuit voltage of the cell group 1 is only 14*2.5 V=35 V, and is less than the lower limit value 42 V of the working voltage range of the load, only how to control the DC-DC conversion circuit to perform lower amplitude limiting on the discharge voltage of the battery is considered.

In some embodiments of this application, when determining the relationship between the discharge voltage of the battery and the working voltage range of the load, the processor may specifically determine a relationship between a collected open-circuit voltage of the cell group and a specified voltage, for example, determine whether the open-circuit voltage of the cell group is greater than the first specified voltage. When determining that the open-circuit voltage of the cell group is greater than or equal to the first specified voltage, the processor determines that the discharge voltage of the battery is within the working voltage range of the load, the first discharge mode may be selected, and the DC-DC conversion circuit supplies power to the load based on an inherent discharge curve of the cell group. When determining that the open-circuit voltage of the cell group is less than the first specified voltage, the processor determines that the discharge voltage of the battery is outside the working voltage range of the load, the second discharge mode may be selected, and the DC-DC conversion circuit supplies power to the load based on the first specified voltage. The first specified voltage is usually within the working voltage range of the load. For example, the lower limit of the working voltage range may be selected as the first specified voltage, or a value slightly greater than the lower limit of the working voltage range is selected as the first specified voltage.

In some other embodiments of this application, when determining the relationship between the discharge voltage of the battery and the working voltage range of the load, the processor may alternatively specifically determine a relationship between a collected state of capacity of the cell group and a specified threshold, for example, determine whether the state of capacity of the cell group is greater than a first specified threshold. When determining that the state of capacity of the cell group is greater than or equal to the first specified threshold, the processor determines that the discharge voltage of the battery is within the working voltage range of the load, the first discharge mode may be selected, and the DC-DC conversion circuit supplies power to the load based on an inherent discharge curve of the cell group. When determining that the state of capacity of the cell group is less than the first specified threshold, the processor determines that the discharge voltage of the battery is outside the working voltage range of the load, the second discharge mode may be selected, and the DC-DC conversion circuit supplies power to the load based on the first specified voltage.

In some embodiments of this application, the DC-DC conversion circuit may specifically include a first switch, a second switch, a third switch, a first capacitor, and an inductor. A first end of the inductor is connected to the positive electrode of the cell group interface, a second end of the inductor is connected to the positive electrode of the battery group interface after being connected to the first switch in series, and the second end of the inductor is connected to the negative electrode of the battery group interface after being connected to the third switch in series. The second switch may be connected in series between the positive electrode of the cell group interface and the positive electrode of the battery group interface, or the second switch may be connected in series between the negative electrode of the cell group interface and the negative electrode of the battery group interface. The first capacitor may be connected between the positive electrode and the negative electrode of the battery group interface. The processor may control the first switch, the second switch, and the third switch to be turned off or turned on.

In some embodiments of this application, the second switch may be specifically connected in series between the first switch and the positive electrode of the battery group interface. In this case, a first end of the first capacitor may be connected to the negative electrode of the battery group interface, and a second end of the first capacitor may be connected to the positive electrode of the battery group interface, or the second end of the first capacitor may be connected between the first switch and the second switch.

In some other embodiments of this application, the second switch may be further specifically connected in series between the first end of the inductor and the positive electrode of the cell group interface. In this case, a first end of the first capacitor may be connected to the negative electrode of the battery group interface, and a second end of the first capacitor is connected to the positive electrode of the battery group interface.

In some other embodiments of this application, the second switch may be further specifically connected in series between the third switch and the negative electrode of the battery group interface. In this case, a first end of the first capacitor may be connected between the third switch and the second switch, and a second end of the first capacitor may be connected to the positive electrode of the battery group interface.

Specifically, when determining that the open-circuit voltage of the cell group is greater than or equal to the first specified voltage, or when determining that the state of capacity of the cell group is greater than or equal to the first specified threshold, the processor may turn off the third switch, and turn on the first switch and the second switch, so that the cell group directly supplies power to the load through the first switch and the second switch, and an output voltage of the battery group interface gradually decreases as the state of capacity of the cell group decreases.

When determining that the open-circuit voltage of the cell group is less than the first specified voltage, or when determining that the state of capacity of the cell group is less than the first specified threshold, the processor may turn on the second switch, and determine a duty cycle of the first switch and a duty cycle of the third switch based on the open-circuit voltage of the cell group and the first specified voltage. For example, the duty cycle of the first switch is (Tₛ-Tₒₙ)/Tₛ, the duty cycle of the third switch is Tₒₙ/Tₛ, and Tₛ is a switch periodicity. In addition, the processor controls, based on the duty cycle, the first switch to be turned off or turned on, and the first switch is turned on in Tₛ-Tₒₙ and turned off in Tₒₙ. The processor controls, based on the duty cycle, the third switch to be turned on or turned off, and the third switch is turned on in Tₒₙ and turned off in Tₛ-Tₒₙ. In this way, the first specified voltage is output between the positive electrode and the negative electrode of the battery group interface. Even if the first switch and the third switch are in a PWM chopper working mode, it is ensured that the output voltage of the battery group interface remains constant at the first specified voltage.

In a specific embodiment, the first specified voltage may be set to be higher than an undervoltage protection point of the load, to ensure that input undervoltage protection of the load is not triggered by an excessively low discharge voltage of the battery at a final stage of discharging of the battery. The first specified threshold SOC is an empirical value, for example, may be set to 15% to 30%. When the output voltage of the battery is higher than the first specified voltage, the first switch and the second switch are turned on, and a discharge loop of the battery has only a static conduction loss, and has no high-frequency on-off action. This greatly reduces a power conversion loss and heat generation of the DC-DC conversion circuit, and achieves high discharge efficiency. When the output voltage of the battery is close to or lower than the lower limit of the working voltage range of the load, the first switch and the third switch are in a pulse-width modulation (pulse-width modulation, PWM) chopper working mode, and energy of the battery pack is continuously provided to the load in a power conversion manner, to implement maximum utilization of energy of the cell. Control is simple, complex model presetting, computing resources, and storage resources are not required, and the battery does not need to maintain high-frequency on-off of the DC-DC conversion circuit in an entire discharging process. Therefore, a component has low costs, and the circuit generates a small amount of heat.

In Embodiment 1, during charging, charging can be performed only when an output voltage of a charging adapter is always higher than a charge voltage of the battery. Specifically, in a charge mode, the processor may turn on the second switch, and control the duty cycle of the first switch and the duty cycle of the third switch, so that the first switch is used as a primary switching transistor, the duty cycle of the first switch is Tₒₙ/Tₛ, the third switch is used as a synchronization transistor that transmits complementary driving signals with the first switch, and the duty cycle of the third switch is 1-Tₒₙ/Tₛ.

### Embodiment 2:

Embodiment 2 is applicable to application in which a large quantity of cells are connected in series in the cell group. For example, the working voltage range of the load is 42 V to 57.6 V, and a quantity n of cells connected in series is 15. After the battery is fully charged, a voltage of each cell reaches 4.0 V, and an open-circuit voltage of the cell group is 15*4.0 V=60 V, where 60 V exceeds an upper limit value 57.6 V of the working voltage range of the back-end load. In this case, the discharge voltage of the battery needs to first be constant at below 57.6 V, to control the DC-DC conversion circuit to supply power to the load based on an inherent discharge Voc-SOC characteristic curve of the cell group.

In some embodiments of this application, when determining the relationship between the discharge voltage of the battery and the working voltage range of the load, the processor may specifically determine a relationship between a collected open-circuit voltage of the cell group and a specified voltage. In a discharging process of the cell group, as the open-circuit voltage gradually decreases, the processor may first determine whether the open-circuit voltage of the cell group is greater than a second specified voltage. When determining that the open-circuit voltage of the cell group is greater than or equal to the second specified voltage, the processor determines that the discharge voltage of the battery is outside the working voltage range of the load, a third discharge mode may be selected, and the third discharge mode is a mode in which the DC-DC conversion circuit supplies power to the load based on the second specified voltage. After determining that the open-circuit voltage of the cell group is less than the second specified voltage, the processor determines whether the open-circuit voltage of the cell group is greater than the first specified voltage. When determining that the open-circuit voltage of the cell group is greater than or equal to the first specified voltage, the processor determines that the discharge voltage of the battery is within the working voltage range of the load, the first discharge mode may be selected, and the DC-DC conversion circuit supplies power to the load based on an inherent discharge curve of the cell group. When determining that the open-circuit voltage of the cell group is less than the first specified voltage, the processor determines that the discharge voltage of the battery is outside the working voltage range of the load, the second discharge mode may be selected, and the DC-DC conversion circuit supplies power to the load based on the first specified voltage. The second specified voltage is greater than the first specified voltage, and the first specified voltage and the second specified voltage are usually within the working voltage range of the load. For example, a lower limit of the working voltage range may be selected as the first specified voltage, or a value slightly greater than the lower limit of the working voltage range is selected as the first specified voltage, and an upper limit of the working voltage range may be selected as the second specified voltage, or a value slightly less than the upper limit of the working voltage range may be selected as the second specified voltage.

In some other embodiments of this application, when determining the relationship between the discharge voltage of the battery and the working voltage range of the load, the processor may alternatively specifically determine a relationship between a collected state of capacity of the cell group and a specified threshold. In a discharging process of the cell group, as the state of capacity gradually decreases, the processor may first determine whether the state of capacity of the cell group is greater than a second specified threshold. When determining that the state of capacity of the cell group is greater than or equal to the second specified threshold, the processor determines that the discharge voltage of the battery is outside the working voltage range of the load, a third discharge mode may be selected, and the DC-DC conversion circuit supplies power to the load based on a second specified voltage. After determining that the state of capacity of the cell group is less than the second specified threshold, the processor determines whether the state of capacity of the cell group is greater than a first specified threshold. When determining that the state of capacity of the cell group is greater than or equal to the first specified threshold, the processor determines that the discharge voltage of the battery is within the working voltage range of the load, the first discharge mode may be selected, and the DC-DC conversion circuit supplies power to the load based on an inherent discharge curve of the cell group. When determining that the state of capacity of the cell group is less than the first specified threshold, the processor determines that the discharge voltage of the battery is outside the working voltage range of the load, the second discharge mode may be selected, and the DC-DC conversion circuit 3 supplies power to the load based on the first specified voltage V1. The second specified threshold is greater than the first specified threshold.

In some embodiments of this application, the DC-DC conversion circuit may specifically include a first switch, a second switch, a third switch, a fourth switch, a first capacitor, a second capacitor, and an inductor. The first capacitor is connected between the positive electrode and the negative electrode of the cell group interface, and the second capacitor is connected between the positive electrode and the negative electrode of the battery group interface. The first switch is connected in series between a first end of the inductor and the positive electrode of the cell group interface, the second switch is connected in series between the first end of the inductor and the negative electrode of the cell group interface, the third switch is connected in series between a second end of the inductor and the positive electrode of the battery group interface, and the fourth switch is connected in series between the second end of the inductor and the negative electrode of the battery group interface. The processor may control the first switch, the second switch, the third switch, and the fourth switch to be turned off or turned on.

When determining that the open-circuit voltage of the cell group is greater than or equal to the second specified voltage, or when determining that the state of capacity of the cell group is greater than or equal to the second specified threshold, the processor may turn on the third switch and turn off the fourth switch, and determine a first duty cycle of the first switch and a first duty cycle of the second switch based on the open-circuit voltage of the cell group and the second specified voltage. For example, the duty cycle of the first switch is Tₒₙ/Tₛ, and the duty cycle of the second switch is (Tₛ-Tₒₙ)/Tₛ. In addition, the processor controls, based on the first duty cycle, the first switch to be turned off or turned on, and the first switch is turned on in Tₒₙ and turned off in Tₛ-Tₒₙ. The processor controls, based on the first duty cycle, the second switch to be turned on or turned off, and the second switch is turned on in Tₛ-Tₒₙ and turned off in Tₒₙ. In this way, the second specified voltage is output between the positive electrode and the negative electrode of the battery group interface. Even if the first switch and the second switch are in a PWM buck chopper mode, it is ensured that the output voltage of the battery group interface remains constant at the second specified voltage.

When determining that the open-circuit voltage of the cell group is less than the second specified voltage and is greater than or equal to the first specified voltage, or when determining that the state of capacity of the cell group is less than the second specified threshold and is greater than or equal to the first specified threshold, the processor may turn on the first switch and the third switch, and turn off the second switch and the fourth switch, so that the cell group directly supplies power to the load through the first switch and the third switch, and the output voltage of the battery group interface gradually decreases as the cell group decreases.

When determining that the open-circuit voltage of the cell group is less than the first specified voltage, or when determining that the state of capacity of the cell group is less than the first specified threshold, the processor may turn on the first switch and turn off the second switch, and determine a second duty cycle of the third switch and a second duty cycle of the fourth switch based on the open-circuit voltage of the cell group and the first specified voltage. For example, the duty cycle of the third switch is (Tₛ-Tₒₙ)/Tₛ, and the duty cycle of the fourth switch is Tₒₙ/Tₛ. In addition, the processor controls, based on the second duty cycle, the third switch to be turned off or turned on, and the third switch is turned on in Tₛ-Tₒₙ and turned off in Tₒₙ. The processor controls, based on the second duty cycle, the fourth switch to be turned on or turned off, and the fourth switch is turned on in Tₒₙ and turned off in Tₛ-Tₒₙ. In this way, the first specified voltage is output between the positive electrode and the negative electrode of the battery group interface. Even if the third switch and the fourth switch are in a PWM boost chopper mode, it is ensured that the output voltage of the battery group interface remains constant at the first specified voltage.

In a specific embodiment, the second specified voltage may be set to the upper limit of the working voltage range of the load, to ensure that input overvoltage protection of the load is not triggered by an excessively high discharge voltage of the battery at an early stage of discharging of the battery. The first specified voltage may be set to be higher than an undervoltage protection point of the load, to ensure that input undervoltage protection of the load is not triggered by an excessively low discharge voltage of the battery at a final stage of discharging of the battery. The first specified threshold and the second specified threshold are empirical values. For example, the first specified threshold may be set to 15% to 30%, and the second specified threshold may be set to 70% to 85%. When the output voltage of the battery is greater than the upper limit of the working voltage range of the load, the first switch and the second switch are in the PWM buck chopper mode, upper amplitude limiting is performed on the output voltage in a power conversion manner, and energy of the battery pack is continuously provided to the load, to implementing maximum utilization of energy of the cell. When the first switch and the third switch are turned on, a discharge loop of the battery has only a static conduction loss, and has no high-frequency on-off action. This greatly reduces a power conversion loss and heat generation of the DC-DC conversion circuit, and achieves high discharge efficiency. When the output voltage of the battery is close to or lower than the lower limit of the working voltage range of the load, the third switch and the fourth switch are in the PWM boost chopper mode, lower amplitude limiting is performed on the output voltage in a power conversion manner, and energy of the battery pack is continuously provided to the load, to implementing maximum utilization of energy of the cell. Control is simple, complex model presetting, computing resources, and storage resources are not required, and the battery does not need to maintain high-frequency on-off of the DC-DC conversion circuit in an entire discharging process. Therefore, a component has low costs, and the circuit generates a small amount of heat.

In Embodiment, during charging, when an output voltage of a charging adapter is higher than the charge voltage of the battery, the processor may turn on the first switch, turn off the second switch, and control the duty cycle of the third switch and the duty cycle of the fourth switch, so that the third switch is used as a primary switching transistor, the duty cycle of the third switch is Tₒₙ/Tₛ, the fourth switch is used as a synchronization transistor that transmits complementary driving signals with the third switch, and the duty cycle of the fourth switch is 1-Tₒₙ/Tₛ. When the output voltage of the charging adapter is lower than the charge voltage of the battery, the processor may turn on the third switch and turn off the fourth switch. The first switch and the second switch work in the PWM boost chopper mode, to charge the battery.

It should be noted that the foregoing two embodiments are merely examples of circuit structures of the battery, and do not constitute a limitation on a type, a circuit structure, or the like of the DC-DC conversion circuit in the battery. Other types of the DC-DC conversion circuit or circuit structures are also included in the protection scope of embodiments of this application.

A type of the switch is not limited in this application. Any switch in the circuit structure may be, but is not limited to, any one of the following switch devices: a metal oxide semiconductor field effect transistor (metal oxide semiconductor field effect transistor, MOSFET) switch device, a gallium nitride (chemical formula: GaN) switch device, a silicon carbide (chemical formula: SiC) switch device, or an insulated gate bipolar transistor (insulated gate bipolar transistor, IGBT) switch device. When any switch is an MOSFET switch device, a GaN switch device, a SiC switch device, or an IGBT switch device, a first electrode of the switch is a source electrode, a second electrode of the switch is a drain electrode, and the processor may control on or off of the switch through a gate electrode of the switch.

According to a second aspect, an embodiment of this application further provides a power consumption system, including the battery and the load that are provided in the first aspect. The battery is configured to supply power to the load. The battery provided in this application may be applied to a power consumption system that needs to be powered by the battery, for example, a communication base station, a data center, industrial and commercial energy storage, an optical power storage station, a new energy vehicle, or a two-wheeled electric vehicle.

According to a third aspect, an embodiment of this application further provides a battery control method. The method may be applied to the processor in the battery provided in the first aspect. The method includes: when the battery is connected to the load, determining a relationship between a discharge voltage of the battery and a working voltage range of the load; and when it is determined that the discharge voltage of the battery is outside the working voltage range of the load, controlling the DC-DC conversion circuit to perform amplitude limiting on the discharge voltage of the battery, to make the discharge voltage of the battery be within the working voltage range of the load; or when it is determined that the discharge voltage of the battery is within the working voltage range of the load, controlling the DC-DC conversion circuit to supply power to the load based on an inherent discharge curve of the cell group.

In some embodiments of this application, the relationship between the discharge voltage of the battery and the working voltage range of the load may be specifically determined in the following manner:
determining whether an open-circuit voltage of the cell group is greater than a first specified voltage, and when determining that the open-circuit voltage of the cell group is greater than or equal to the first specified voltage, determining that the discharge voltage of the battery is within the working voltage range of the load, or when determining that the open-circuit voltage of the cell group is less than the first specified voltage, determining that the discharge voltage of the battery is outside the working voltage range of the load, where the first specified voltage is within the working voltage range of the load; or determining whether a state of capacity of the cell group is greater than a first specified threshold, and when determining that the state of capacity of the cell group is greater than or equal to the first specified threshold, determining that the discharge voltage of the battery is within the working voltage range of the load, or when determining that the state of capacity of the cell group is less than the first specified threshold, determining that the discharge voltage of the battery is outside the working voltage range of the load.

Further, in some other embodiments of this application, the determining a relationship between a discharge voltage of the battery and a working voltage range of the load may further include the following manner:
determining whether the open-circuit voltage of the cell group is greater than a second specified voltage, where the second specified voltage is greater than the first specified voltage, and the second specified voltage is within the working voltage range of the load, and when determining that the open-circuit voltage of the cell group is greater than or equal to the second specified voltage, determining that the discharge voltage of the battery is outside the working voltage range of the load; or determining whether the state of capacity of the cell group is greater than a second specified threshold, where the second specified threshold is greater than the first specified threshold, and when determining that the state of capacity of the cell group is greater than or equal to the second specified threshold, determining that the discharge voltage of the battery is outside the working voltage range of the load.

In some embodiments of this application, the DC-DC conversion circuit specifically outputs the discharge voltage of the battery in a constant-voltage, linear, piecewise linear, or stepwise amplitude limiting manner.

Specifically, when it is determined that the open-circuit voltage of the cell group is less than the first specified voltage, or when it is determined that the state of capacity of the cell group is less than the first specified threshold, the DC-DC conversion circuit supplies power to the load based on the first specified voltage.

Further, when it is determined that the open-circuit voltage of the cell group is greater than or equal to the second specified voltage, or when it is determined that the state of capacity of the cell group is greater than or equal to the second specified threshold, the DC-DC conversion circuit supplies power to the load based on the second specified voltage.

For technical effect that can be achieved by any possible design in any one of the second aspect and the third aspect, refer to the technical effect that can be achieved by any possible design in the first aspect. Details are not described herein again. These aspects or another aspect of this application is clearer and more comprehensible in descriptions of the following embodiments.

### BRIEF DESCRIPTION OF DRAWINGS

FIG. 1 is a diagram of discharge curves of a lithium iron phosphate cell and a sodium ion cell;
FIG. 2 is a schematic of a circuit structure of a battery according to an embodiment of this application;
FIG. 3 shows a mapping relationship between an output voltage of a DC-DC conversion circuit and a discharge curve of a cell group according to Embodiment 1;
FIG. 4a is a schematic of a specific circuit structure of a battery according to Embodiment 1;
FIG. 4b is a schematic of another specific circuit structure of a battery according to Embodiment 1;
FIG. 4c is a schematic of another specific circuit structure of a battery according to Embodiment 1;
FIG. 4d is a schematic of another specific circuit structure of a battery according to Embodiment 1;
FIG. 5 is a diagram of a working time sequence of each switch in a constant-voltage discharge mode according to Embodiment 1;
FIG. 6 shows a mapping relationship between an output voltage of a DC-DC conversion circuit and a discharge curve of a cell group according to Embodiment 2;
FIG. 7 is a schematic of a specific circuit structure of a battery according to Embodiment 2;
FIG. 8a is a diagram of a working time sequence of each switch in a boost charge mode or a buck discharge mode according to Embodiment 2;
FIG. 8b is a diagram of a working time sequence of each switch in a boost discharge mode according to Embodiment 2; and
FIG. 9 is a flowchart of a battery control method according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. "A plurality of" in this application means two or more. "at least one" means one or more. In addition, "at least one of the following items (pieces)" or a similar expression thereof means any combination of these items (pieces), including any combination of singular items (pieces) or plural items (pieces). In addition, it should be understood that in description of this application, terms such as "first", "second", and the like are merely used for distinguishing and description, but should not be understood as indicating or implying relative importance, or should not be understood as indicating or implying a sequence.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

In addition, same reference numerals in the figures represent same or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

A connection and a link in embodiments of this application may be a direct connection, or may be a connection through at least one component. For example, that A is connected to B (that is, A is linked to B) may indicate that A is directly connected to B, or A is connected to B through C.

This application provides a battery, a battery control method, and a power consumption system, to make full use of an available capacity of a cell group. The battery, the battery control method, and the power consumption system provided in embodiments of this application are based on a same technical concept. Because problem-resolving principles are similar, mutual reference may be made to embodiments, and repeated parts are not described again.

In the following some terms in this application are described, to help a person skilled in the art have a better understanding.
1. An electric power device is a device driven by electric energy, usually uses a battery as an electric energy source, and converts electric energy into mechanical energy motion through components such as a controller and a motor, to implement a function of the electric power device. For example, the electric power device may be but is not limited to an electric vehicle (for example, an electric automobile, an electric bicycle, or an electric tricycle) or an electric mechanical device in an industrial scenario.

It should be noted that specifications of rated working voltages of different types of electric power devices may be different, and rated working voltages of different models of electric power devices of a same type may also be different.

An electric bicycle is used as an example. Currently, there are two specifications of rated working voltages of common electric bicycles: 48 V and 60 V.

2. A battery is an apparatus that supplies electric energy to the electric power device. For example, a current battery may be a lead-acid battery, a lithium battery, or a sodium battery. In embodiments of this application, the battery is a product finally provided by a battery manufacturer for a customer.

In embodiments of this application, the battery may include a cell group, a processor, a DC-DC conversion circuit, and a battery management system (battery management system, BMS) chip. Components other than the cell group may form a BMS. Because the battery includes a plurality of components, the battery may also be referred to as a battery group.

The following terms (3) to (7) separately describe each component in the battery.

3. The cell group is a component that stores electric energy in the battery, and includes a plurality of cells. The cell is also referred to as a single cell (cell), or a single electrochemical cell, and is a basic element that forms the cell group. Generally, it is considered that cells of a same type have a same capacity and can provide a same voltage. The cell group may also be referred to as a battery pack.

4. The processor is configured to implement control and management inside the battery, and finally implement an external power supply function or an internal charging function of the battery, so that an output voltage of the battery can adapt to electric power devices of a plurality of specifications of rated working voltages.

For example, the processor may be various hardware chips having a processing function, for example, a micro control unit (micro controller unit, MCU), or may be at least one of the following: an application-specific integrated circuit (application-specific integrated circuit, ASIC), a programmable logic device (programmable logic device, PLD), and single-chip microcomputer. The PLD may be a complex programmable logic device (complex programmable logic device, CPLD), a field-programmable logic gate array (field-programmable gate array, FPGA), a generic array logic (generic array logic, GAL), or any combination thereof.

5. A direct current (direct current, DC) conversion circuit is an apparatus for converting a direct current power supply of a voltage into a direct current power supply of another voltage, and is also referred to as a direct current power conversion circuit. Therefore, the direct current conversion circuit is also referred to as a DC-DC conversion circuit. Based on a voltage conversion relationship, DC-DC conversion circuits are divided into boost (boost) DC-DC conversion circuits, buck (buck) DC-DC conversion circuits, and bidirectional buck-boost (buck-boost) DC-DC conversion circuits.

For example, bidirectional buck-boost DC-DC conversion circuits may be further classified into polarity-reversed bidirectional buck-boost DC-DC conversion circuits and same-polarity bidirectional buck-boost DC-DC conversion circuits.

6. The BMS chip, as a battery management chip, can monitor safety of the cell group. For example, the BMS chip may collect a voltage sampling value and/or a temperature sampling value of the cell group, and monitor a voltage and/or a temperature of the cell group, so that the cell group is in a safe working state.

For example, the BMS chip may be an analog front end (analog front end, AFE).

The BMS may be placed outside the battery to form an independent module, or may be integrated with the battery. The BMS may integrate with a DC-DC circuit, or the BMS may form the battery together with an independent DC-DC circuit and cell group. There is no limitation on a form.

7. A duty cycle (duty cycle) is a proportion of power-on time in a pulse cycle (specified time periodicity).

The battery provided in embodiments of this application is applicable to any one of a lead-acid battery, a lithium ion battery, a sodium ion battery, and the like.

FIG. 2 is a schematic of a circuit structure of a battery according to an embodiment of this application.

Refer to FIG. 2. A battery provided in an embodiment of this application may specifically include a cell group 1, a processor 2, and a DC-DC conversion circuit 3. The cell group 1 may include n cells connected in series, and the DC-DC conversion circuit 3 is connected to the cell group 1. In some embodiments of this application, the DC-DC conversion circuit 3 may have a cell group interface configured to connect to the cell group 1 and a battery group interface configured to connect to a load or a charging adapter. Specifically, a positive electrode B+ of the cell group interface is connected to a positive electrode of the cell group 1, and a negative electrode B- of the cell group interface is connected to a negative electrode of the cell group 1. A positive electrode P+ of the battery group interface is configured to connect to a positive electrode of the load or a positive electrode of the charging adapter, and a negative electrode P- of the battery group interface is configured to connect to a negative electrode of the load or a negative electrode of the charging adapter. The negative electrode B- of the cell group interface is connected to the negative electrode P- of the battery group interface. The processor 2 may control a status of the DC-DC conversion circuit 3, to complete charging, discharging, and electric energy exchanging with the outside. When the battery is connected to the load, the processor 2 may determine an open-circuit voltage Voc of the cell group 1 or determine a state of capacity SOC of the cell group 1, and the DC-DC conversion circuit 3 may supply power to the load in a first discharge mode or a second discharge mode based on the open-circuit voltage Voc of the cell group 1 or the state of capacity SOC of the cell group 1, to make full use of an available capacity of the cell group 1. Specifically, the first discharge mode is supplying power to the load based on a discharge curve of the cell group, the second discharge mode is supplying power to the load based on a first specified voltage, and the first specified voltage is within a working voltage range of the load.

Specifically, when the battery is connected to the load for discharging, the processor 2 may determine a relationship between a discharge voltage of the battery and the working voltage range of the load. When it is determined that the discharge voltage of the battery is outside the working voltage range of the load, the second discharge mode may be selected, and the DC-DC conversion circuit 3 is controlled to perform amplitude limiting on the discharge voltage of the battery, to make the discharge voltage of the battery be within the working voltage range of the load, to make full use of the available capacity of the cell group 1 as much as possible, so as to match a wide discharge voltage range of a sodium ion battery with the working voltage range of the load. When determining that the discharge voltage of the battery is within the working voltage range of the load, the processor 2 may select the first discharge mode, and may keep a switch connected in series in a discharge loop in the DC-DC conversion circuit 3 in a turned-on state (that is, the switch does not perform a switching action of turning on and turning off), so that the open-circuit voltage of the cell group 1 is directly output, through the turned-on switch, to the battery group interface through the cell group interface, to control the DC-DC conversion circuit 3 to supply power to the load based on a discharge curve of the cell group 1. A curve formed by a change of an open-circuit voltage (namely, Vocv) of a cell during discharging with a state of capacity (state of capacity, SOC) is the discharge curve of the cell group 1. The discharge curve of the cell varies with a material. For example, FIG. 1 shows discharge curves of a lithium iron phosphate cell and a sodium ion cell. The discharge curve of the lithium iron phosphate cell is flatter, and the discharge curve of the sodium ion cell is steeper. In this way, a high-frequency on-off action in the DC-DC conversion circuit 3 can be reduced, a loss of the switch can be reduced, and discharge efficiency of the battery can be improved.

In some embodiments of this application, when the processor 2 controls the DC-DC conversion circuit 3 to perform amplitude limiting on the discharge voltage of the battery, the DC-DC conversion circuit 3 specifically outputs the discharge voltage of the battery in a constant-voltage, linear, piecewise linear, or stepwise amplitude limiting manner. The constant-voltage means that an output voltage of the battery group interface of the DC-DC conversion circuit 3 is constant. The linear means that the output voltage of the battery group interface of the DC-DC conversion circuit 3 decreases linearly monotonically or increases linearly monotonically. The piecewise linear means that the output voltage of the battery group interface of the DC-DC conversion circuit 3 may be formed by combining two or more broken lines, and each line is linear. The stepwise means that the output voltage of the battery group interface of the DC-DC conversion circuit 3 includes two or more constant values. The following two embodiments are described by using an example in which the processor 2 controls the DC-DC conversion circuit 3 to perform constant-voltage amplitude limiting on the discharge voltage of the battery. However, the two embodiments may also be implemented in another amplitude limiting manner. This is not limited herein.

For different relationships between a quantity of cells connected in series in the cell group 1 and the working voltage range of the load, embodiments of this application provide two embodiments.

### Embodiment 1:

Embodiment 1 is applicable to application in which a small quantity of cells are connected in series in the cell group 1. For example, the working voltage range of the load is 42 V to 57.6 V, and a quantity n of cells connected in series is 14. Even if the battery is fully charged, that is, a voltage of each cell reaches 4.0 V, the open-circuit voltage Voc=n*Vocv of the cell group 1 is 14*4.0 V=56 V, where Vocv is an open-circuit voltage of a cell, and is less than an upper limit value 57.6 V of the working voltage range of the back-end load. In this case, when the battery is discharged to have a voltage less than a lower limit value of the working voltage range of the load, for example, the voltage of the cell is discharged to 2.5 V, and the open-circuit voltage Voc of the cell group 1 is only 14*2.5 V=35 V, and is less than the lower limit value 42 V of the working voltage range of the load, only how to control the DC-DC conversion circuit 3 to perform lower amplitude limiting on the discharge voltage of the battery is considered.

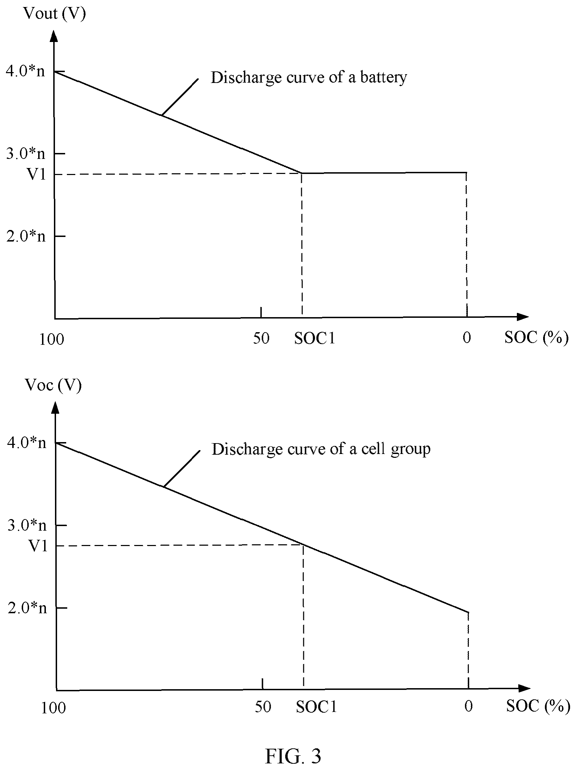

FIG. 3 schematically shows a mapping relationship between an output voltage of the DC-DC conversion circuit and the discharge curve of the cell group according to Embodiment 1.

Refer to FIG. 3. In some embodiments of this application, when determining the relationship between the discharge voltage of the battery and the working voltage range of the load, the processor 2 may specifically determine a relationship between a collected open-circuit voltage Voc of the cell group 1 and a specified voltage, for example, determine whether the open-circuit voltage Voc of the cell group 1 is greater than the first specified voltage V1. When determining that the open-circuit voltage Voc of the cell group 1 is greater than or equal to the first specified voltage V1, the processor 2 determines that the discharge voltage of the battery is within the working voltage range of the load, the first discharge mode may be selected, and the DC-DC conversion circuit 3 supplies power to the load based on an inherent discharge curve of the cell group 1. When determining that the open-circuit voltage Voc of the cell group 1 is less than the first specified voltage V1, the processor 2 determines that the discharge voltage of the battery is outside the working voltage range of the load, the second discharge mode may be selected, and the DC-DC conversion circuit 3 supplies power to the load based on the first specified voltage V1. The first specified voltage V1 is usually within the working voltage range of the load. For example, the lower limit of the working voltage range may be selected as the first specified voltage V1, or a value slightly greater than the lower limit of the working voltage range is selected as the first specified voltage V1.

In some other embodiments of this application, when determining the relationship between the discharge voltage of the battery and the working voltage range of the load, the processor 2 may alternatively specifically determine a relationship between a collected state of capacity SOC of the cell group 1 and a specified threshold, for example, determine whether the state of capacity SOC of the cell group 1 is greater than a first specified threshold SOC1. When determining that the state of capacity SOC of the cell group 1 is greater than or equal to the first specified threshold SOC1, the processor 2 determines that the discharge voltage of the battery is within the working voltage range of the load, the first discharge mode may be selected, and the DC-DC conversion circuit 3 supplies power to the load based on an inherent discharge curve of the cell group 1. When determining that the state of capacity SOC of the cell group 1 is less than the first specified threshold SOC1, the processor 2 determines that the discharge voltage of the battery is outside the working voltage range of the load, the second discharge mode may be selected, and the DC-DC conversion circuit 3 supplies power to the load based on the first specified voltage V1.

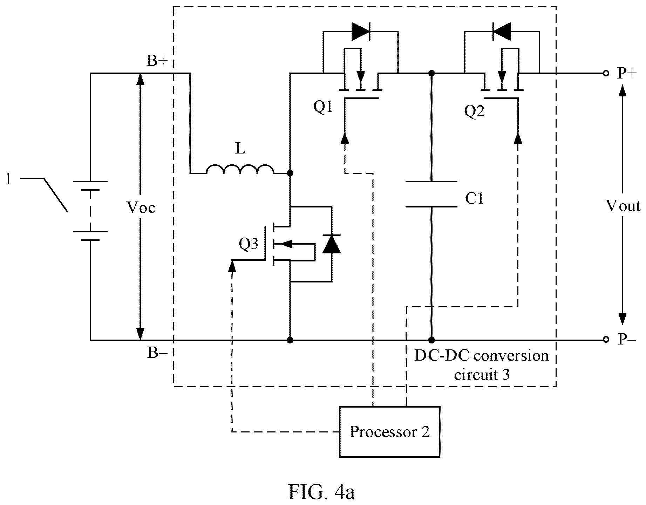

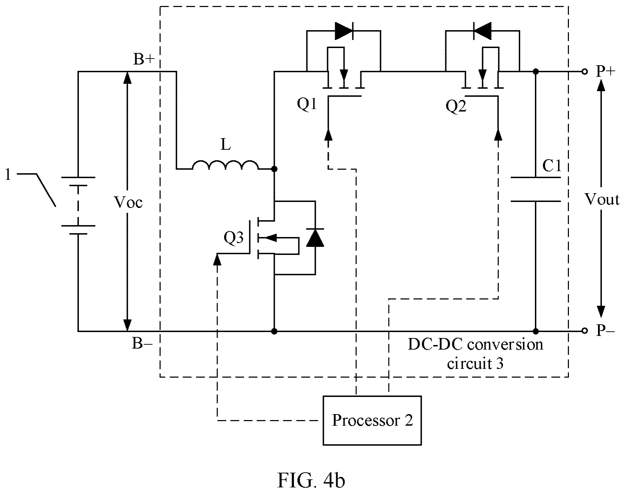

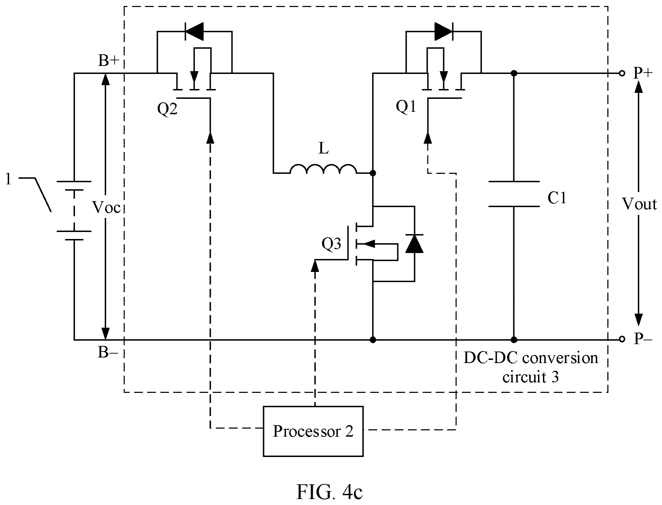

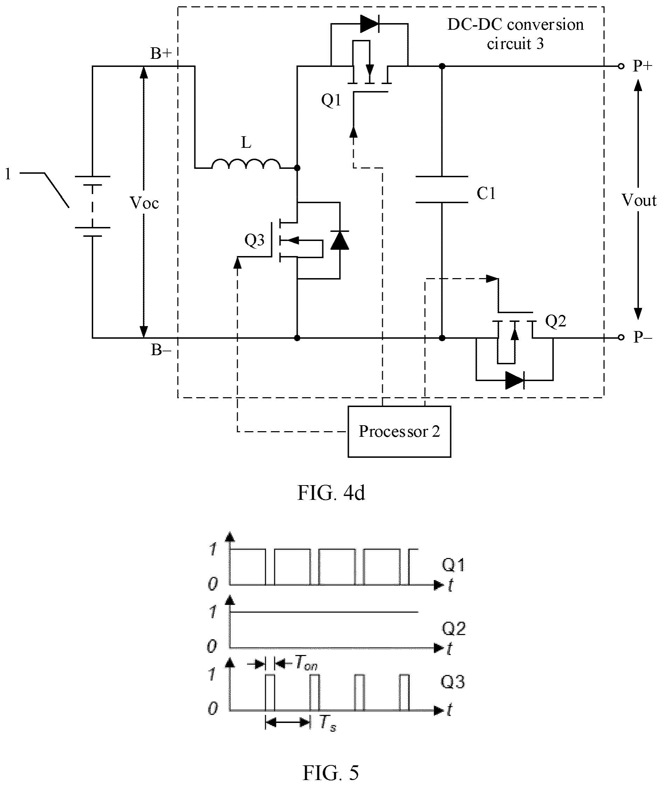

FIG. 4a is a schematic of a specific circuit structure of the battery according to Embodiment 1, FIG. 4b is a schematic of another specific circuit structure of the battery according to Embodiment 1, FIG. 4c is a schematic of another specific circuit structure of the battery according to Embodiment 1, and FIG. 4d is a schematic of another specific circuit structure of the battery according to Embodiment 1.

Refer to FIG. 4a to FIG. 4d. The DC-DC conversion circuit 3 may specifically include a first switch Q1, a second switch Q2, a third switch Q3, a first capacitor C1, and an inductor L. A first end of the inductor L is connected to the positive electrode B+ of the cell group interface, a second end of the inductor L is connected to the positive electrode P+ of the battery group interface after being connected to the first switch Q1 in series, and the second end of the inductor L is connected to the negative electrode P- of the battery group interface after being connected to the third switch Q3 in series. The second switch Q2 may be connected in series between the positive electrode B+ of the cell group interface and the positive electrode P+ of the battery group interface, or the second switch Q2 may be connected in series between the negative electrode B- of the cell group interface and the negative electrode P- of the battery group interface. The first capacitor C1 may be connected between the positive electrode P+ and the negative electrode P- of the battery group interface. The processor 2 may control the first switch Q1, the second switch Q2, and the third switch Q3 to be turned off or turned on.

Refer to FIG. 4a and FIG. 4b. In some embodiments of this application, the second switch Q2 may be specifically connected in series between the first switch Q1 and the positive electrode P+ of the battery group interface. In this case, a first end of the first capacitor C1 may be connected to the negative electrode P- of the battery group interface. Refer to FIG. 4b. A second end of the first capacitor C1 may be connected to the positive electrode P+ of the battery group interface. Alternatively, refer to FIG. 4a. The second end of the first capacitor C1 may be connected between the first switch Q1 and the second switch Q2.

Refer to FIG. 4c. In some other embodiments of this application, the second switch Q2 may be further specifically connected in series between the first end of the inductor L and the positive electrode B+ of the cell group interface. In this case, a first end of the first capacitor C1 may be connected to the negative electrode P- of the battery group interface, and a second end of the first capacitor C1 is connected to the positive electrode P+ of the battery group interface.

Refer to FIG. 4d. In some other embodiments of this application, the second switch Q2 may be further specifically connected in series between the third switch Q3 and the negative electrode P- of the battery group interface. In this case, a first end of the first capacitor C1 may be connected between the third switch Q3 and the second switch Q2, and a second end of the first capacitor C1 may be connected to the positive electrode P+ of the battery group interface.

FIG. 5 is a diagram of a working time sequence of each switch in a constant-voltage discharge mode according to Embodiment 1.

Specifically, when determining that the open-circuit voltage Voc of the cell group 1 is greater than or equal to the first specified voltage V1, or when determining that the state of capacity SOC of the cell group is greater than or equal to the first specified threshold SOC1, that is, when Voc≥V1 or SOC≥SOC1, the processor 2 may turn off the third switch Q3, and turn on the first switch Q1 and the second switch Q2, so that the cell group 1 directly supplies power to the load through the first switch Q1 and the second switch Q2, and the output voltage Vout of the battery group interface gradually decreases as the SOC of the cell group decreases.

Refer to FIG. 5. When determining that the open-circuit voltage Voc of the cell group 1 is less than the first specified voltage V1, or when determining that the state of capacity SOC of the cell group 1 is less than the first specified threshold SOC1, that is, when Voc<V1 or SOC<SOC1, the processor 2 may turn on the second switch Q2, and determine a duty cycle of the first switch Q1 and a duty cycle of the third switch Q3 based on the open-circuit voltage Voc of the cell group and the first specified voltage V1. In FIG. 5, the duty cycle of the first switch Q1 is (Tₛ-Tₒₙ)/Tₛ, the duty cycle of the third switch Q3 is Tₒₙ/Tₛ, and Tₛ is a switch periodicity. In addition, the processor 2 controls, based on the duty cycle, the first switch Q1 to be turned off or turned on, and the first switch Q1 is turned on in Tₛ-Tₒₙ and turned off in Tₒₙ. The processor 2 controls, based on the duty cycle, the third switch Q3 to be turned on or turned off, and the third switch Q3 is turned on in Tₒₙ and turned off in Tₛ-Tₒₙ. In this way, the first specified voltage V1 is output between the positive electrode P+ and the negative electrode P- of the battery group interface. Even if the first switch Q1 and the third switch Q3 are in a PWM chopper working mode, it is ensured that the output voltage Vout of the battery group interface remains constant at the first specified voltage V1.

In a specific embodiment, the first specified voltage V1 may be set to be higher than an undervoltage protection point of the load, to ensure that input undervoltage protection of the load is not triggered by an excessively low discharge voltage of the battery at a final stage of discharging of the battery. The first specified threshold SOC1 is an empirical value, for example, may be set to 15% to 30%. When Voc≥V1 or SOC≥SOC1, the first switch Q1 and the second switch Q2 are turned on, and a discharge loop of the battery has only a static conduction loss, and has no high-frequency on-off action. This greatly reduces a power conversion loss and heat generation of the DC-DC conversion circuit 3, and achieves high discharge efficiency. When Voc<V1 or SOC<SOC1, the first switch Q1 and the third switch Q3 are in a pulse-width modulation (pulse-width modulation, PWM) chopper working mode, and energy of the battery pack is continuously provided to the load in a power conversion manner, to implement maximum utilization of energy of the cell. Control is simple, complex model presetting, computing resources, and storage resources are not required, and the battery does not need to maintain high-frequency on-off of the DC-DC conversion circuit 3 in an entire discharging process. Therefore, a component has low costs, and the circuit generates a small amount of heat.

In Embodiment 1, during charging, charging can be performed only when an output voltage of a charging adapter is always higher than a charge voltage of the battery. Specifically, in a charge mode, the processor 2 may turn on the second switch Q2, and control the duty cycle of the first switch Q1 and the duty cycle of the third switch Q3, so that the first switch Q1 is used as a primary switching transistor, the duty cycle of the first switch Q1 is Tₒₙ/Tₛ, the third switch Q3 is used as a synchronization transistor that transmits complementary driving signals with the first switch Q1, and the duty cycle of the third switch Q3 is 1-Tₒₙ/Tₛ.

### Embodiment 2:

Embodiment 2 is applicable to application in which a large quantity of cells are connected in series in the cell group 1. For example, the working voltage range of the load is 42 V to 57.6 V, and a quantity n of cells connected in series is 15. After the battery is fully charged, a voltage of each cell reaches 4.0 V, and the open-circuit voltage Voc=n*Vocv of the cell group 1 is 15*4.0 V=60 V, where Vocv is an open-circuit voltage of a cell, and 60 V exceeds an upper limit value 57.6 V of the working voltage range of the back-end load. In this case, a discharge voltage of the battery needs to first be constant at below 57.6 V, to control the DC-DC conversion circuit 3 to supply power to the load based on an inherent discharge Voc-SOC characteristic curve of the cell group 1.

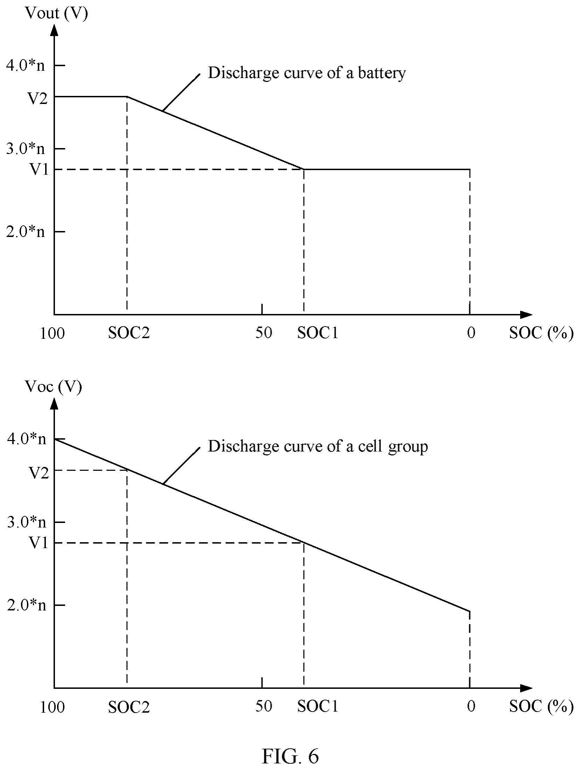

FIG. 6 schematically shows a mapping relationship between an output voltage of the DC-DC conversion circuit and the discharge curve of the cell group in Embodiment 2.

Refer to FIG. 6. In some embodiments of this application, when determining the relationship between the discharge voltage of the battery and the working voltage range of the load, the processor 2 may specifically determine a relationship between a collected open-circuit voltage Voc of the cell group 1 and a specified voltage. In a discharging process of the cell group 1, as the open-circuit voltage Voc gradually decreases, the processor 2 may first determine whether the open-circuit voltage Voc of the cell group 1 is greater than a second specified voltage V2. When determining that the open-circuit voltage Voc of the cell group 1 is greater than or equal to the second specified voltage V2, the processor 2 determines that the discharge voltage of the battery is outside the working voltage range of the load, a third discharge mode may be selected, and the third discharge mode is a mode in which the DC-DC conversion circuit 3 supplies power to the load based on the second specified voltage V2. After determining that the open-circuit voltage Voc of the cell group 1 is less than the second specified voltage V2, the processor 2 determines whether the open-circuit voltage Voc of the cell group 1 is greater than the first specified voltage V1. When determining that the open-circuit voltage Voc of the cell group 1 is greater than or equal to the first specified voltage V1, the processor 2 determines that the discharge voltage of the battery is within the working voltage range of the load, the first discharge mode may be selected, and the DC-DC conversion circuit 3 supplies power to the load based on an inherent discharge curve of the cell group 1. When determining that the open-circuit voltage Voc of the cell group 1 is less than the first specified voltage V1, the processor 2 determines that the discharge voltage of the battery is outside the working voltage range of the load, the second discharge mode may be selected, and the DC-DC conversion circuit 3 supplies power to the load based on the first specified voltage V1. The second specified voltage V2 is greater than the first specified voltage V1, and the first specified voltage V1 and the second specified voltage V2 are usually within the working voltage range of the load. For example, a lower limit of the working voltage range may be selected as the first specified voltage V1, or a value slightly greater than the lower limit of the working voltage range is selected as the first specified voltage V1, and an upper limit of the working voltage range may be selected as the second specified voltage V2, or a value slightly less than the upper limit of the working voltage range may be selected as the second specified voltage V2.

In some other embodiments of this application, when determining the relationship between the discharge voltage of the battery and the working voltage range of the load, the processor 2 may alternatively specifically determine a relationship between a collected state of capacity SOC of the cell group 1 and a specified threshold. In a discharging process of the cell group 1, as the state of capacity SOC gradually decreases, the processor 2 may first determine whether the state of capacity SOC of the cell group 1 is greater than a second specified threshold SOC2. When determining that the state of capacity SOC of the cell group 1 is greater than or equal to the second specified threshold SOC2, the processor 2 determines that the discharge voltage of the battery is outside the working voltage range of the load, a third discharge mode may be selected, and the DC-DC conversion circuit 3 supplies power to the load based on a second specified voltage V2. After determining that the state of capacity SOC of the cell group 1 is less than the second specified threshold SOC2, the processor 2 determines whether the state of capacity SOC of the cell group 1 is greater than a first specified threshold SOC1. When determining that the state of capacity SOC of the cell group 1 is greater than or equal to the first specified threshold SOC1, the processor 2 determines that the discharge voltage of the battery is within the working voltage range of the load, the first discharge mode may be selected, and the DC-DC conversion circuit 3 supplies power to the load based on an inherent discharge curve of the cell group 1. When determining that the state of capacity SOC of the cell group 1 is less than the first specified threshold SOC1, the processor 2 determines that the discharge voltage of the battery is outside the working voltage range of the load, the second discharge mode may be selected, and the DC-DC conversion circuit 3 supplies power to the load based on the first specified voltage V1. The second specified threshold SOC2 is greater than the first specified threshold SOC1.

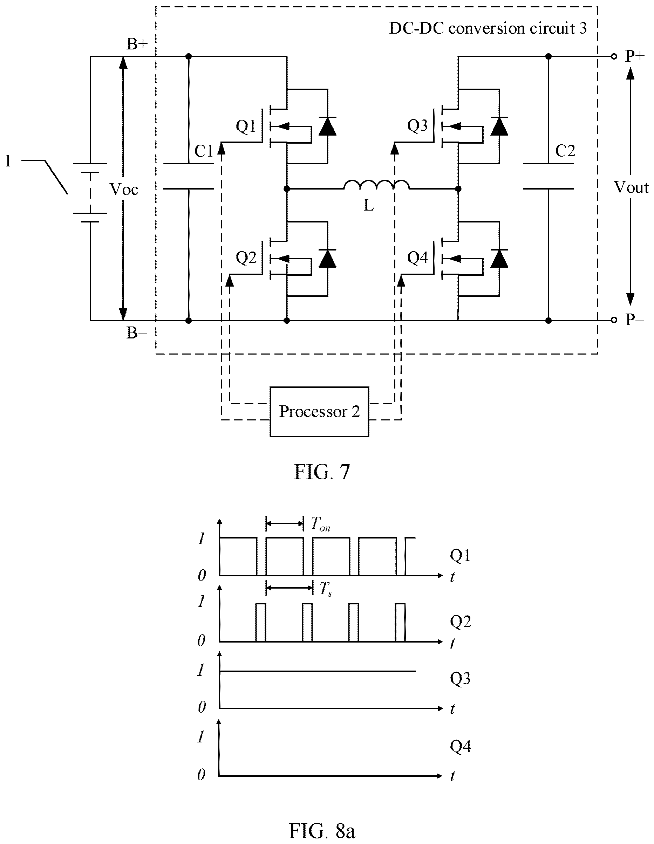

FIG. 7 is a schematic of a specific circuit structure of the battery according to Embodiment 2.

Refer to FIG. 7. The DC-DC conversion circuit 3 may specifically include a first switch Q1, a second switch Q2, a third switch Q3, a fourth switch Q4, a first capacitor C1, a second capacitor C2, and an inductor L. The first capacitor C1 is connected between the positive electrode B+ and the negative electrode B- of the cell group interface, and the second capacitor C2 is connected between the positive electrode P+ and the negative electrode P- of the battery group interface. The first switch Q1 is connected in series between a first end of the inductor L and the positive electrode B+ of the cell group interface, the second switch Q2 is connected in series between the first end of the inductor L and the negative electrode of the cell group interface B-, the third switch Q3 is connected in series between a second end of the inductor L and the positive electrode P+ of the battery group interface, and the fourth switch Q4 is connected in series between the second end of the inductor L and the negative electrode P- of the battery group interface. The processor 2 may control the first switch Q1, the second switch Q2, the third switch Q3, and the fourth switch Q4 to be turned off or turned on.

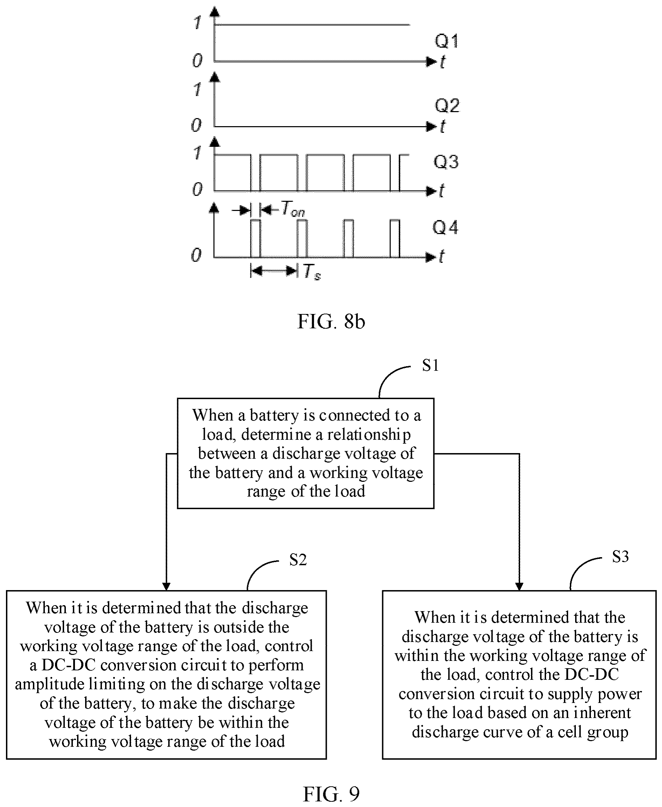

FIG. 8a is a diagram of a working time sequence of each switch in a boost charge mode or a buck discharge mode according to Embodiment 2, and FIG. 8b is a diagram of a working time sequence of each switch in a boost discharge mode according to Embodiment 2.

Refer to FIG. 8a. When determining that the open-circuit voltage Voc of the cell group 1 is greater than or equal to the second specified voltage V2, or when determining that the state of capacity SOC of the cell group 1 is greater than or equal to the second specified threshold SOC2, that is, when Voc≥V2 or SOC≥SOC2, the processor 2 may turn on the third switch Q3 and turn off the fourth switch Q4, and determine a first duty cycle of the first switch Q1 and a first duty cycle of the second switch Q2 based on the open-circuit voltage Voc of the cell group 1 and the second specified voltage V2. In FIG. 8a, the duty cycle of the first switch Q1 is Tₒₙ/Tₛ, and the duty cycle of the second switch Q2 is (Tₛ-Tₒₙ)/Tₛ. In addition, the processor 2 controls, based on the first duty cycle, the first switch Q to be turned off or turned on, and the first switch Q1 is turned on in Tₒₙ and turned off in Tₛ-Tₒₙ. The processor 2 controls, based on the first duty cycle, the second switch Q2 to be turned on or turned off, and the second switch Q2 is turned on in Tₛ-Tₒₙ and turned off in Tₒₙ. In this way, the second specified voltage V2 is output between the positive electrode and the negative electrode of the battery group interface. Even if the first switch Q1 and the second switch Q2 are in a PWM buck chopper mode, it is ensured that the output voltage Vout of the battery group interface remains constant at the second specified voltage V2.

When determining that the open-circuit voltage Voc of the cell group 1 is less than the second specified voltage V2 and is greater than or equal to the first specified voltage V1, or when determining that the state of capacity SOC of the cell group 1 is less than the second specified threshold SOC2 and is greater than or equal to the first specified threshold SOC1, that is, when V2>Voc≥V1 or SOC2>SOC≥SOC1, the processor 2 may turn on the first switch Q1 and the third switch Q3, and turn off the second switch Q2 and the fourth switch Q4, so that the cell group 1 directly supplies power to the load through the first switch Q1 and the third switch Q3, and the output voltage Vout of the battery group interface gradually decreases as the SOC of the cell group decreases.

Refer to FIG. 8b. When determining that the open-circuit voltage Voc of the cell group 1 is less than the first specified voltage V1, or when determining that the state of capacity SOC of the cell group 1 is less than the first specified threshold SOC1, that is, when Voc<V1 or SOC<SOC1, the processor 2 may turn on the first switch Q1 and turn off the second switch Q2, and determine a second duty cycle of the third switch Q3 and a second duty cycle of the fourth switch Q4 based on the open-circuit voltage Voc of the cell group 1 and the first specified voltage V1. In FIG. 8b, the duty cycle of the third switch Q3 is (Tₛ-Tₒₙ)/Tₛ, and the duty cycle of the fourth switch Q4 is Tₒₙ/Tₛ. In addition, the processor 2 controls, based on the second duty cycle, the third switch Q3 to be turned off or turned on, and the third switch Q3 is turned on in Tₛ-Tₒₙ and turned off in Tₒₙ. The processor 2 controls, based on the second duty cycle, the fourth switch Q4 to be turned on or turned off, and the fourth switch Q4 is turned on in Tₒₙ and turned off in Tₛ-Tₒₙ. In this way, the first specified voltage V1 is output between the positive electrode P+ and the negative electrode P- of the battery group interface. Even if the third switch Q3 and the fourth switch Q4 are in a PWM boost chopper mode, it is ensured that the output voltage Vout of the battery group interface remains constant at the first specified voltage V1.

In a specific embodiment, the second specified voltage V2 may be set to the upper limit of the working voltage range of the load, to ensure that input overvoltage protection of the load is not triggered by an excessively high discharge voltage of the battery at an early stage of discharging of the battery. The first specified voltage V1 may be set to be higher than an undervoltage protection point of the load, to ensure that input undervoltage protection of the load is not triggered by an excessively low discharge voltage of the battery at a final stage of discharging of the battery. The first specified threshold SOC1 and the second specified threshold SOC2 are empirical values. For example, the first specified threshold SOC1 may be set to 15% to 30%, and the second specified threshold SOC2 may be set to 70% to 85%. When Voc≥V2 or SOC≥SOC2, that is, when the output voltage of the battery is greater than the upper limit of the working voltage range of the load, the first switch Q1 and the second switch Q2 are in the PWM buck chopper mode, upper amplitude limiting is performed on the output voltage Vout in a power conversion manner, and energy of the battery pack is continuously provided to the load, to implementing maximum utilization of energy of the cell. When Voc>V1 or SOC>SOC1, the first switch Q1 and the third switch Q3 are turned on, and a discharge loop of the battery has only a static conduction loss, and has no high-frequency on-off action. This greatly reduces a power conversion loss and heat generation of the DC-DC conversion circuit 3, and achieves high discharge efficiency. When Voc≤V1 or SOC≤SOC1, that is, when the output voltage of the battery is close to or lower than the lower limit of the working voltage range of the load, the third switch Q3 and the fourth switch Q4 are in the PWM boost chopper mode, lower amplitude limiting is performed on the output voltage Vout in a power conversion manner, and energy of the battery pack is continuously provided to the load, to implementing maximum utilization of energy of the cell. Control is simple, complex model presetting, computing resources, and storage resources are not required, and the battery does not need to maintain high-frequency on-off of the DC-DC conversion circuit 3 in an entire discharging process. Therefore, a component has low costs, and the circuit generates a small amount of heat.

In Embodiment 2, during charging, when an output voltage of a charging adapter is higher than the charge voltage of the battery, the processor 2 may turn on the first switch Q1, turn off the second switch Q2, and control the duty cycle of the third switch Q3 and the duty cycle of the fourth switch Q4, so that the third switch Q3 is used as a primary switching transistor, the duty cycle of the third switch Q3 is Tₒₙ/Tₛ, the fourth switch Q4 is used as a synchronization transistor that transmits complementary driving signals with the third switch Q3, and the duty cycle of the fourth switch Q4 is 1-Tₒₙ/Tₛ. When the output voltage of the charging adapter is lower than the charge voltage of the battery, the processor 2 may turn on the third switch Q3 and turn off the fourth switch Q4. Refer to FIG. 8a. The first switch Q1 and the second switch Q2 work in the PWM boost chopper mode, to charge the battery.

It should be noted that the foregoing two embodiments are merely examples of circuit structures of the battery, and do not constitute a limitation on a type, a circuit structure, or the like of the DC-DC conversion circuit 3 in the battery. Other types of the DC-DC conversion circuit or circuit structures are also included in the protection scope of embodiments of this application.

A type of the switch is not limited in this application. Any switch in the circuit structure may be, but is not limited to, any one of the following switch devices: a metal oxide semiconductor field effect transistor (metal oxide semiconductor field effect transistor, MOSFET) switch device, a gallium nitride (chemical formula: GaN) switch device, a silicon carbide (chemical formula: SiC) switch device, or an insulated gate bipolar transistor (insulated gate bipolar transistor, IGBT) switch device. When any switch is an MOSFET switch device, a GaN switch device, a SiC switch device, or an IGBT switch device, a first electrode of the switch is a source electrode, a second electrode of the switch is a drain electrode, and the processor 2 may control on or off of the switch through a gate electrode of the switch.

Based on the battery provided in the foregoing embodiments, this application further provides a power consumption system, including the battery and the load that are provided in embodiments of this application. The battery is configured to supply power to the load. The battery provided in this application may be applied to a power consumption system that needs to be powered by the battery, for example, a communication base station, a data center, industrial and commercial energy storage, an optical power storage station, a new energy vehicle, or a two-wheeled electric vehicle.

Based on the battery provided in the foregoing embodiments, this application further provides a battery control method. The method may be applied to the processor in the battery provided in the foregoing embodiments. Refer to FIG. 9. The method includes the following steps.

S1: When the battery is connected to the load, determine a relationship between a discharge voltage of the battery and a working voltage range of the load.

In some embodiments of this application, the following manner may be specifically used:
determining whether an open-circuit voltage of the cell group is greater than a first specified voltage, and when determining that the open-circuit voltage of the cell group is greater than or equal to the first specified voltage, determining that the discharge voltage of the battery is within the working voltage range of the load, or when determining that the open-circuit voltage of the cell group is less than the first specified voltage, determining that the discharge voltage of the battery is outside the working voltage range of the load, where the first specified voltage is within the working voltage range of the load; or determining whether a state of capacity of the cell group is greater than a first specified threshold, and when determining that the state of capacity of the cell group is greater than or equal to the first specified threshold, determining that the discharge voltage of the battery is within the working voltage range of the load, or when determining that the state of capacity of the cell group is less than the first specified threshold, determining that the discharge voltage of the battery is outside the working voltage range of the load.

Further, in some other embodiments of this application, the following manner may be further included:
determining whether the open-circuit voltage of the cell group is greater than a second specified voltage, where the second specified voltage is greater than the first specified voltage, and the second specified voltage is within the working voltage range of the load, and when determining that the open-circuit voltage of the cell group is greater than or equal to the second specified voltage, determining that the discharge voltage of the battery is outside the working voltage range of the load; or determining whether the state of capacity of the cell group is greater than a second specified threshold, where the second specified threshold is greater than the first specified threshold, and when determining that the state of capacity of the cell group is greater than or equal to the second specified threshold, determining that the discharge voltage of the battery is outside the working voltage range of the load.

S2: When it is determined that the discharge voltage of the battery is outside the working voltage range of the load, control the DC-DC conversion circuit to perform amplitude limiting on the discharge voltage of the battery, to make the discharge voltage of the battery be within the working voltage range of the load.

In some embodiments of this application, the DC-DC conversion circuit specifically outputs the discharge voltage of the battery in a constant-voltage, linear, piecewise linear, or stepwise amplitude limiting manner.

Specifically, when it is determined that the open-circuit voltage of the cell group is less than the first specified voltage, or when it is determined that the state of capacity of the cell group is less than the first specified threshold, the DC-DC conversion circuit supplies power to the load based on the first specified voltage.

Further, when it is determined that the open-circuit voltage of the cell group is greater than or equal to the second specified voltage, or when it is determined that the state of capacity of the cell group is greater than or equal to the second specified threshold, the DC-DC conversion circuit supplies power to the load based on the second specified voltage.

S3: When it is determined that the discharge voltage of the battery is within the working voltage range of the load, control the DC-DC conversion circuit to supply power to the load based on an inherent discharge curve of the cell group.

In conclusion, embodiments of this application provide a battery, a battery control method, and a power consumption system. After the battery is connected to the load, to make full use of an available capacity of the cell group, when determining that the discharge voltage of the battery is outside the working voltage range of the load, the processor in the battery may control the DC-DC conversion circuit to perform amplitude limiting on the discharge voltage of the battery, to make the discharge voltage of the battery be within the working voltage range of the load. When determining that the discharge voltage of the battery is within the working voltage range of the load, the processor controls the DC-DC conversion circuit to supply power to the load based on the inherent discharge curve of the cell group, so that the high-frequency on-off action in the DC-DC conversion circuit can be reduced, and a loss of the switch can be reduced.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer readable memory that can indicate the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A battery, comprising a cell group, a processor, and a direct current-direct current DC-DC conversion circuit, wherein the DC-DC conversion circuit is connected to the cell group;
the processor is configured to determine an open-circuit voltage of the cell group or a state of capacity of the cell group; and
the DC-DC conversion circuit is configured to supply power to a load in a first discharge mode or a second discharge mode based on the open-circuit voltage of the cell group or the state of capacity of the cell group, wherein the first discharge mode is supplying power to the load based on a discharge curve of the cell group, the second discharge mode is supplying power to the load based on a first specified voltage, and the first specified voltage is within a working voltage range of the load.

2. The battery according to claim 1, wherein
in response to the open-circuit voltage of the cell group being greater than or equal to the first specified voltage, the DC-DC conversion circuit is configured to supply power to the load in the first discharge mode; or
in response to the open-circuit voltage of the cell group being less than the first specified voltage, the DC-DC conversion circuit is configured to supply power to the load in the second discharge mode.

3. The battery according to claim 1, wherein
in response to the state of capacity of the cell group being greater than or equal to a first specified threshold, the DC-DC conversion circuit is configured to supply power to the load in the first discharge mode; or
in response to the state of capacity of the cell group being less than the first specified threshold, the DC-DC conversion circuit is configured to supply power to the load in the second discharge mode.

4. The battery according to claim 2, further comprising:
in response to the open-circuit voltage of the cell group being greater than or equal to a second specified voltage, the DC-DC conversion circuit is configured to supply power to the load in a third discharge mode, wherein
the third discharge mode is supplying power to the load based on the second specified voltage, the second specified voltage is greater than the first specified voltage, and the second specified voltage is within the working voltage range of the load.

5. The battery according to claim 3, further comprising:
in response to the state of capacity of the cell group being greater than or equal to a second specified threshold, the DC-DC conversion circuit is configured to supply power to the load in a third discharge mode, wherein
the third discharge mode is supplying power to the load based on a second specified voltage, the second specified voltage is greater than the first specified voltage, and the second specified voltage is within the working voltage range of the load.

6. The battery according to claim 2 or 3, wherein the DC-DC conversion circuit comprises a cell group interface, a battery group interface, a first switch, a second switch, a third switch, a first capacitor, and an inductor;
a positive electrode of the cell group interface is connected to a positive electrode of the cell group, a negative electrode of the cell group interface is connected to a negative electrode of the cell group, a positive electrode of the battery group interface is configured to connect to a positive electrode of the load, and a negative electrode of the battery group interface is configured to connect to a negative electrode of the load;
the negative electrode of the cell group interface is connected to the negative electrode of the battery group interface;
a first end of the inductor is connected to the positive electrode of the cell group interface, a second end of the inductor is connected to the positive electrode of the battery group interface after being connected to the first switch in series, and the second end of the inductor is connected to the negative electrode of the battery group interface after being connected to the third switch in series;
the second switch is connected in series between the positive electrode of the cell group interface and the positive electrode of the battery group interface, or the second switch is connected in series between the negative electrode of the cell group interface and the negative electrode of the battery group interface;
the first capacitor is connected between the positive electrode and the negative electrode of the battery group interface; and
the processor is configured to control the first switch, the second switch, and the third switch to be turned off or turned on.

7. The battery according to claim 6, wherein the second switch is connected in series between the first switch and the positive electrode of the battery group interface; and
a first end of the first capacitor is connected to the negative electrode of the battery group interface, and a second end of the first capacitor is connected to the positive electrode of the battery group interface, or the second end of the first capacitor is connected between the first switch and the second switch.

8. The battery according to claim 6, wherein the second switch is connected in series between the first end of the inductor and the positive electrode of the cell group interface; and
a first end of the first capacitor is connected to the negative electrode of the battery group interface, and a second end of the first capacitor is connected to the positive electrode of the battery group interface.

9. The battery according to claim 6, wherein the second switch is connected in series between the third switch and the negative electrode of the battery group interface; and
a first end of the first capacitor is connected between the third switch and the second switch, and a second end of the first capacitor is connected to the positive electrode of the battery group interface.

10. The battery according to any one of claims 6 to 9, wherein in response to the open-circuit voltage of the cell group being greater than or equal to the first specified voltage or the state of capacity of the cell group being greater than or equal to the first specified threshold, the processor is configured to control the third switch to be turned off, and the processor controls the first switch and the second switch to be turned on.

11. The battery according to any one of claims 6 to 9, wherein in response to the open-circuit voltage of the cell group being less than the first specified voltage or the state of capacity of the cell group being less than the first specified threshold, the processor is configured to control the second switch to be turned on; the processor determines a duty cycle of the first switch and a duty cycle of the third switch based on the open-circuit voltage of the cell group and the first specified voltage; and the processor controls, based on the duty cycle, the first switch to be turned off or turned on, and the processor controls, based on the duty cycle, the third switch to be turned off or turned on, to output the first specified voltage between the positive electrode and the negative electrode of the battery group interface.

12. The battery according to claim 4 or 5, wherein the DC-DC conversion circuit comprises a cell group interface, a battery group interface, a first switch, a second switch, a third switch, a fourth switch, a first capacitor, a second capacitor, and an inductor;
a positive electrode of the cell group interface is connected to a positive electrode of the cell group, a negative electrode of the cell group interface is connected to a negative electrode of the cell group, a positive electrode of the battery group interface is configured to connect to a positive electrode of the load or a positive electrode of a charging adapter, and a negative electrode of the battery group interface is configured to connect to a negative electrode of the load or a negative electrode of the charging adapter;
the negative electrode of the cell group interface is connected to the negative electrode of the battery group interface;
the first capacitor is connected between the positive electrode and the negative electrode of the cell group interface, and the second capacitor is connected between the positive electrode and the negative electrode of the battery group interface;
the first switch is connected in series between a first end of the inductor and the positive electrode of the cell group interface, and the second switch is connected in series between the first end of the inductor and the negative electrode of the cell group interface;
the third switch is connected in series between a second end of the inductor and the positive electrode of the battery group interface, and the fourth switch is connected in series between the second end of the inductor and the negative electrode of the battery group interface; and
the processor is configured to control the first switch, the second switch, the third switch, and the fourth switch to be turned off or turned on.

13. The battery according to claim 12, wherein in response to the open-circuit voltage of the cell group being greater than or equal to the second specified voltage or the state of capacity of the cell group being greater than or equal to the second specified threshold, the processor is configured to control the third switch to be turned on, and the processor controls the fourth switch to be turned off; and
the processor is configured to determine a first duty cycle of the first switch and a first duty cycle of the second switch based on the open-circuit voltage of the cell group and the second specified voltage; and the processor controls, based on the first duty cycle, the first switch to be turned off or turned on, and the processor controls, based on the first duty cycle, the second switch to be turned off or turned on, to output the second specified voltage between the positive electrode and the negative electrode of the battery group interface.

14. The battery according to claim 12, wherein in response to the open-circuit voltage of the cell group being less than the second specified voltage and greater than or equal to the first specified voltage or the state of capacity of the cell group being less than the second specified threshold and greater than or equal to the first specified threshold, the processor is configured to control the first switch and the third switch to be turned on, and the processor controls the second switch and the fourth switch to be turned off.

15. The battery according to claim 12, wherein in response to the open-circuit voltage of the cell group being less than the first specified voltage or the state of capacity of the cell group being less than the first specified threshold, the processor is configured to control the first switch to be turned on, and the processor controls the second switch to be turned off; the processor determines a second duty cycle of the third switch and a second duty cycle of the fourth switch based on the open-circuit voltage of the cell group and the first specified voltage; and the processor controls, based on the second duty cycle, the third switch to be turned off or turned on, and the processor controls, based on the second duty cycle, the fourth switch to be turned off or turned on, to output the first specified voltage between the positive electrode and the negative electrode of the battery group interface.

16. A power consumption system, comprising a battery and a load, wherein the battery comprises a cell group, a processor, and a direct current-direct current DC-DC conversion circuit, wherein the DC-DC conversion circuit is connected to both the cell group and the load;
the processor is configured to determine an open-circuit voltage of the cell group or a state of capacity of the cell group; and
the DC-DC conversion circuit is configured to supply power to the load in a first discharge mode or a second discharge mode based on the open-circuit voltage of the cell group or the state of capacity of the cell group, wherein the first discharge mode is supplying power to the load based on a discharge curve of the cell group, the second discharge mode is supplying power to the load based on a first specified voltage, and the first specified voltage is within a working voltage range of the load.

17. The power consumption system according to claim 16, wherein
in response to the open-circuit voltage of the cell group being greater than or equal to the first specified voltage, the DC-DC conversion circuit is configured to supply power to the load in the first discharge mode; or
in response to the open-circuit voltage of the cell group being less than the first specified voltage, the DC-DC conversion circuit is configured to supply power to the load in the second discharge mode.

18. The power consumption system according to claim 16, wherein
in response to the state of capacity of the cell group being greater than or equal to the first specified threshold, the DC-DC conversion circuit is configured to supply power to the load in the first discharge mode; or
in response to the state of capacity of the cell group being less than the first specified threshold, the DC-DC conversion circuit is configured to supply power to the load in the second discharge mode.

19. The power consumption system according to claim 17, further comprising:
in response to the open-circuit voltage of the cell group being greater than or equal to a second specified voltage, the DC-DC conversion circuit is configured to supply power to the load in a third discharge mode, wherein
the third discharge mode is supplying power to the load based on the second specified voltage, the second specified voltage is greater than the first specified voltage, and the second specified voltage is within the working voltage range of the load.

20. The power consumption system according to claim 18, further comprising:
in response to the state of capacity of the cell group being greater than or equal to a second specified threshold, the DC-DC conversion circuit is configured to supply power to the load in a third discharge mode, wherein
the third discharge mode is supplying power to the load based on a second specified voltage, the second specified voltage is greater than the first specified voltage, and the second specified voltage is within the working voltage range of the load.
